# EUROPEAN PATENT SPECIFICATION

(11) **EP 4 376 584 B1**
(45) Date of publication and mention of the grant of the patent: **23.04.2025**
(21) Application number: 22757650.1
(22) Date of filing: 28.07.2022
(51) Int. Cl.: A01B 33/14, A01D 34/73

(54) **AGRICULTURAL MACHINE**
LANDWIRTSCHAFTLICHE MASCHINE
MACHINE AGRICOLE

(30) Priority: 30.07.2021 IT 202100020420
(43) Date of publication of application: 05.06.2024
(73) Proprietor: Maschio Gaspardo S.p.A., 35011 Campodarsego (PD) (IT)
(72) Inventor: MASCHIO, Andrea, 33075 Morsano al Tagliamento (PN) (IT); BARALDI, Paolo, 35137 Padova (IT)
(74) Representative: Milan, Guglielmo
(86) International application number: PCT/IB2022/056971
(87) International publication number: WO 2023/007410

(56) References cited:
- EP-A1- 1 208 729
- EP-A1- 3 056 072
- DE-A1- 10 249 069
- DE-A1- 10 307 694
- DE-U1- 202016 000 847
- DE-U1- 8 325 853
- US-A1- 2016 242 355

## Description

### Technical field

The invention relates to an agricultural machine, such as, for example, a rotary harrow of the type preferably comprising at least one rotor which is rotatably supported about an axis, the at least one rotor including a tool holder which extends transversely relative to the axis of the rotor and at least one tool which is removably secured to the tool holder, each tool including a blade and a shank, with which the blade is fixed in a respective seat of the tool holder, rapid fixing means being provided between the seat and the respective tool in order to secure the shank of the tool in the respective seat, the rapid fixing means including at least one respective spring-mounted tooth which is mounted on the seat so as to interfere with the shank when it is inserted in the seat in order to retain it there.

In the following context, the term "rotary harrow" is intended to be understood to comprise, in addition to mono-rotor and multi-rotor harrows with a vertical axis, preferably also milling machines or similar mono-rotor and multi-rotor machinery with a horizontal axis. In a preferable manner, the invention is particularly suitable for being fitted to rotary harrows of the first type. Naturally, the invention also relates to agricultural machines of different types, such as, for example, lawnmowers, shredders and the like.

### Technological background

In the specific technical field, it is known that the tools, as a result of the abrasion produced by the movement thereof in the soil, are subjected to powerful wear and have to be replaced periodically.

In order to facilitate this operation, it is known to fit the rotors with tool holders with rapid attachment which are able to facilitate at least one and preferably both operations for removing the worn tool and replacing it with a corresponding replacement.

It is further known that in a tool in which there is defined an attachment shank with respect to the tool holder and a blade which is intended to process the soil, only the blade part becomes worn in practice. Therefore, the replacement of the tools is carried out without uniform consumption of the tools having occurred but only a significant consumption of the blade. With reference to the material consumed by wear, it is readily possible to consider that, for each kilogram of material worn, more than double the quantity of non-worn material which forms the shank is disposed of when the tool is replaced.

Finally, it is known that the tools for rotary harrows (but also for other types of agricultural machines) are produced in two shapes, left and right, respectively, which are different as a result of the profile and the bent portion, in such a manner that the two tools which are normally fitted to a rotor are not interchangeable with each other. This causes troublesome assembly errors and causes both the manufacturer and the final user to supply and keep in stock two different types of tool in order to be able to appropriately equip the same harrow or the same agricultural machine.

The incidence of the costs connected with this disadvantage finally means that, in many cases, it is preferable to construct tools with a high mass from materials which are not particularly sophisticated rather than tools with a reduced mass but with more resistant materials. All this affects the value of the rotating masses and the levels of energy consumption of the harrow or other agricultural machine, it not being possible to construct tools which are thinner and lighter but with greater mechanical strength for inherent reasons of cost.

DE202016000847 describes a rotary harrow, the rotors of which are provided with tools which include a square element and a blade. The square element is fixed to the tool holder with a branch thereof and to the blade with the opposite branch. It is thereby possible to replace the blade which is the only part which is subjected to high wear while keeping unchanged the square element. The fixing between the two members is of the screw and bolt type, however, which does not allow the change of the worn parts to be carried out rapidly. The replacement of the tools further requires the use of spanners and tools which make this operation long, difficult and subject to losses of the particular members to be assembled and to simple errors.

Substantially similar systems which are similarly disadvantageous are further described in DE202011003182 and GB2267808.

DE10249069 describes a rotary harrow which is provided with a tool holder which is provided with two tools, each one including a blade and a shank with which the blade is fixed in a respective seat of the tool holder. Each seat is provided with rapid fixing means including a respective spring-mounted tooth which is mounted on the seat so as to interfere with the shank when it is inserted in the seat in order to retain it at that location. The insertion of the shank in the seat requires that an extension piece of the tooth be gripped in order to pull it out of the seat, counter to the spring, and then in order to release it so as to engage with a hole which is formed in the shank. The same operation is required to remove a worn tool. In all cases, it is extremely difficult to grip the extension piece of the tooth in order to be able to remove it from the seat, taking into account that it is necessary to work in the lower portion of the harrow, in the presence of encrustations of soil and mud, often using a tool which assists in removing the tooth. This applies similarly and involves the same disadvantages when inserting the replacement tool.

Another example of a system for fixing tools of rotary harrows is known from DE8325853U1. In this case, the tool is fixed by means of a wedge which is inserted between the shank of the tool and the respective seat. The wedge is connected to the seat by means of a screw which must be tightened in order for the wedge to perform its retaining function on the shank. Therefore, it is extremely complicated to replace the tool, taking into account that it is necessary to work with a screwdriver, in the presence of encrustations of soil and mud, taking care not to lose the wedge or the screw. It may be noted that the wedge in particular is not a standard component which can readily be obtained commercially. In any case, the wedge and the screw are both indispensable in order to be able to securely fix and retain the tool counter to the thrust forces transmitted by the blade during the soil processing. Another disadvantage is that the system for fixing the shank projects out of the area travelled by the blade during the rotation of the tool holder and is therefore subjected to wear during the processing of the soil.

Other examples of systems for fixing tools of rotary harrows are known from DE10307694A1, EP3056072A1, or EP1208729A1.

A support for lawnmower blades is known from US2016/242355A1.

### Description of the invention

The technical problem addressed by the invention is to provide an agricultural machine, such as, for example, a rotary harrow or a lawnmower, and a kit for this machine and, as a component of the machine, a tool for the machine which is structurally and functionally configured to solve at least some and preferably all of the technical problems set out with reference to the cited prior art.

This problem is solved by the invention by means of an agricultural machine, for example, a rotary harrow or a lawnmower, which is constructed according to one or more of the features of the appended claims.

The agricultural machine comprises at least one rotor which is rotatably supported about an axis. The at least one rotor includes a tool holder which extends transversely relative to the axis of the rotor and at least one tool. The at least one tool is secured to the tool holder in a removable manner.

It is preferable for the at least one tool to extend longitudinally.

It is further preferable for the tool holder to extend in a location plane which is transverse to the longitudinal development of the tool when the tool is secured to the tool holder.

Each tool includes a blade and a shank, with which the blade is fixed in a respective seat of the tool holder. Rapid fixing means are provided between the seat and the respective tool in order to secure the shank of the tool in the respective seat.

It may be noted that, in the present context, the term "rapid fixing means" is preferably intended to be understood to be means which can carry out a fixing operation, more particularly a reversible fixing operation, without any need for any tool.

The rapid fixing means include at least one respective spring-mounted tooth which is mounted on the seat so as to interfere with the shank when it is inserted in the seat in order to retain it there.

The spring-mounted tooth comprises a tooth and a resilient element which are preferably operationally associated with each other.

The rapid fixing means and the shank are formed so as to urge the tooth out of the seat counter to the individual spring or resilient element by means of interference between the tooth and shank when the shank is inserted in the seat and to release the tooth to engage with a recess of the shank in order to retain the shank in the respective seat when the tooth and recess are located in a mutually corresponding position.

In this manner, at least the operation for inserting the tooth can be carried out without any tool simply by completely inserting the shank of the tooth in the respective seat.

The spring-mounted tooth is advantageously sufficient per se to ensure the retention of the shank in the seat thereof even (and particularly) with respect to the forces transmitted by the blade during the processing of the soil. Therefore, it is possible (and preferable) for the rapid fixing means to consist essentially of the spring-mounted tooth. In order to secure the shank of the tool in the respective seat, it is further preferable for no additional or different fixing means to be provided with respect to the spring-mounted tooth.

It may be noted that, in this context, the term "spring-mounted tooth" is intended to be understood to mean preferably a tooth which is urged by a resilient element. The resilient element may be a spring, for example, of the leaf spring type, by means of which the tooth is spring-mounted. Naturally, there may be provided a resilient element which is of a different type from the spring, but which is functionally similar.

According to one embodiment, the tooth is formed in a catch-like manner, preferably in the manner of a locking catch, that is to say, with such a form as to move out of the seat counter to the individual spring or resilient element when a surface thereof interferes with a corresponding surface of the shank during insertion of the shank in the seat thereof, and then to snap-fit so as to engage with the corresponding recess when the shank is correctly inserted in the seat. This facilitates the insertion of the tool in the seat and ensures the correct retention thereof.

Advantageously, the catch-like locking tooth is of the type suitable for closing doors in a building in a snap-fitting manner.

The catch-like tooth is preferably movable and is preferably formed with a wedge-like profile, the vertex of which is advantageously directed towards the seat of the shank. The wedge-like profile may be, for example, triangular, in particular a right triangle, preferably with an oblique side which forms a sliding plane for a surface of the shank so as to press the tooth counter to the resilient element out of the seat when the shank is inserted therein.

In some embodiments, the shank comprises opposing sides (more particularly, a pair of opposing sides) which preferably represent the small sides of the shank. Furthermore, the shank may comprise a pair of opposing faces which preferably represent the large sides of the shank.

According to embodiments, the opposing sides of the shank connect the opposing faces of the shank to each other.

Preferably, the opposing sides and where applicable the opposing faces of the shank extend longitudinally in a removal direction of the tool from the seat. The opposing faces of the shank may comprise an internal face and an external face. When the shank is inserted in the seat thereof, the internal face is preferably directed towards the axis of the rotor while the external face is preferably directed in the opposite direction.

Preferably, the opposing sides of the shank are not facing the axis of the rotor when the shank is inserted in the respective seat.

Advantageously, at least one of the opposing sides of the shank is provided with the recess which is able to receive the tooth for blocking the tool in the tool holder in the removal direction of the tool from the seat.

It will be appreciated that forming the recess in one of the opposing sides of the shank has the technical effect of allowing the shank to be retained in the region of one of the sides thereof rather than one of the faces thereof. The retention of the shank in the region of one of the sides thereof is advantageous because it does not influence the radial spatial requirement of the tool holder. In this manner, the tool holder projects to a lesser extent outside the circular area which is travelled by the blade during the rotation of the rotor, and therefore it is less subjected to wear during the processing of the soil.

In some embodiments, a respective recess is formed at opposite sides of the shank. In this manner, the tool is perfectly reversible and can be used in both seats of the tool holder with no difference. This makes it easier to mount the tools and prevents positioning errors.

In a preferred version, the tool or at least the blade or the shank is axially symmetrical.

It is preferable for the recess to be formed on a side of the shank with a tapered formation, in particular a substantially triangular tapered formation, towards the opposite side.

It may be noted that, in this context, the term "sides" of the shank is preferably intended to be understood to mean the sides which do not face the axis of the rotor when the shank is inserted in the respective seat. There are preferably two opposing sides of the shank. Preferably, none of the sides faces the axis of the rotor when the shank is inserted in the respective seat.

The spring-mounted tooth can be mounted on a flank of the seat. Preferably, the flank of the seat does not face the axis of the rotor. More particularly, when the shank is inserted in the respective seat, the flank of the seat faces the at least one of the sides of the shank at which the recess is formed. In this manner, advantageously, the spring-mounted tooth is arranged radially inside the area travelled by the blade during the rotation of the rotor.

It will be appreciated that the spring-mounted tooth being mounted on the flank of the seat has the technical effect of protecting the spring-mounted tooth from wear to which it would be subjected if it projected outside the area travelled by the blade during the rotation of the rotor.

In a preferred embodiment, the resilient element comprises an extension piece, preferably opposite the tooth. The extension piece may project from the flank of the respective seat outwards, in particular in the tangential direction with respect to the rotor.

The extension piece is preferably arranged radially inside the area which is travelled by the blade during the rotation of the rotor.

The extension piece can advantageously be gripped by the flank of the respective seat in order to facilitate the removal of the tooth from the recess.

It will be appreciated that the extension piece allows the tool to be replaced without having to assemble or disassemble other components and without having to use any particular tool.

In one embodiment, an angle between 0° and 40°, preferably between 5° and 40° and even more preferably between 10° and 30°, is formed between the shank and blade. This angle allows the shank to be inserted in the respective seat more easily by an operator who is at the side of the agricultural machine.

To this end, it appears to be advantageous to note that the shank and more particularly the opposite sides of the shank extend longitudinally in a direction for removing the tool from the seat. Naturally, the seat also preferably extends in the same removal direction.

Therefore, it will be appreciated that the removal direction of the tool from the seat can form, with respect to the plane of the blade, the same angle which is formed between the shank and the blade. More particularly, the removal direction can form, with respect to the plane of the blade, an angle between 0° and 40°, preferably between 5° and 40° and more particularly between 10° and 30°.

It may be noted that, when the shank is inserted in the seat, the blade is preferably located in a plane which is substantially parallel with the axis of the rotor. Therefore, the removal direction of the tool from the seat can form, with respect to the axis of the rotor, substantially the same angle which is formed between the shank and the blade. More particularly, the removal direction can form, with respect to the axis of the rotor, an angle between 0° and 40°, preferably between 5° and 40° and more particularly between 10° and 30°.

This geometry ensures that the shank extends inside the area travelled by the blade during the rotation of the rotor. In this manner, the shank is less exposed to wear during the processing of the soil.

There is provision for the blade to have a progressively tapered cross-section in the direction away from the shank, preferably with a cross-section which is initially trapezoidal near the shank in order to taper into a triangular cross-section at the opposite side.

Preferably, the blade and shank are made in one piece, that is to say, they are monolithic, and in one embodiment the tool does not have any bent portions.

In one aspect, the present invention relates to a kit for an agricultural machine, such as, for example, a rotary harrow or a lawnmower, the kit comprising a tool holder, at least one tool and rapid fixing means between the tool holder and the tool according to one or more of the above-mentioned features. The at least one tool is removably secured to the tool holder. Each tool includes a blade and a shank with which the blade is fixed in a respective seat of the tool holder, the shank being an end portion of the tool. The rapid fixing means are provided between the seat and the respective tool in order to secure the shank of the tool in the respective seat. The rapid fixing means include at least one respective spring-mounted tooth which comprises a tooth and a resilient element which are mounted on the seat so as to interfere with the shank when it is inserted in the seat in order to retain it there. The rapid fixing means and the shank are formed so as to urge the tooth out of the seat counter to the resilient element by means of interference between the tooth and shank when the shank is inserted in the seat and to release the tooth to engage with a recess of the shank in order to retain the shank in the respective seat when the tooth and recess are located in a mutually corresponding position.

The invention further relates, as a component of an agricultural machine, to a tool therefor according to one or more of the above-mentioned features.

In one aspect, the invention relates to a tool for tool holders of a rotor for a rotary harrow, the tool comprising a blade and a shank according to one or more of the above-mentioned features. With the shank, the blade can be removably secured to the tool holder. The blade and shank are in one piece. An angle between 5° and 40° is formed between the shank and blade. The blade has a cross-section which progressively tapers away from the shank.

The shank can be inserted in the seat of the tool holder and at least one of the opposing sides of the shank is provided with a recess which can receive a tooth in a catch-like manner for blocking the tool in the tool holder in the removal direction of the tool from the seat.

The recess is transverse relative to the removal direction of the shank from the seat so that the tooth interferes with the recess when the shank is inserted in the seat, in order to retain it there.

At least one wall of the recess is located in a plane which is transverse to the removal direction of the shank from the respective seat so that the tooth interferes with the wall when the shank is inserted in the respective seat in order to retain it there.

It is further preferable for, on at least one of the sides of the shank at the side opposite the blade, a surface which has an inclined plane or which is rounded and which can interfere with the tooth to be provided in order to urge it when the shank is inserted in the seat in the removal direction.

As a result of the above-mentioned features, it is possible to construct lighter tools, in which the mass of the blade is predominant with respect to the mass of the shank so as to dispose of extremely small amounts of material when the tools have to be replaced. This, together with the form of the blade, allows a reduction in the overall mass of the tools with many advantages. These include the fact of reducing the rotary masses and the problems of balancing the rotors, and the fact of being able to use, for the same production cost, steels with high resistances which are capable of withstanding wear or other materials with high performance levels. This leads to the possibility of further reducing the thicknesses and the cross-sections of the blade providing inter alia less resistance to the penetration into the ground with the advantageous result of a reduced energy requirement in order to obtain the same processing of the soil and therefore lower consumption levels for the same performance levels.

### Brief description of the drawings

The features and advantages of the invention will be better understood from the following detailed description of a number of preferred though non-limiting embodiments thereof which are illustrated with reference to the appended drawings, in which:
- Figure 1 is a front view of a rotor for a rotary harrow which is constructed according to a first embodiment of the invention;
- Figure 2 is a perspective view of the rotor of Figure 1 from below;
- Figure 3 is a perspective view of a tool which is fitted to the rotor of Figure 1;
- Figure 4 is a perspective view of a construction variant of a detail of the rotor of Figure 1;
- Figures 5 and 6 are views of a detail of the rotor of Figure 1 in the partially disassembled state;
- Figure 7 is a perspective view of a detail of the rotor of Figure 1.

### Preferred embodiment of the invention

In the Figures, there is generally designated 1 a rotor for a rotary harrow which is constructed according to the present invention. The remaining structure of a harrow suitable for being provided with similar rotors generally comprises a box-shaped carrying element which is elongate in a longitudinal direction which is perpendicular to the advance direction of the harrow and on which a plurality of rotors 1 are supported with axes X which are mutually parallel and vertical.

Naturally, there is also the possibility that the rotor according to the invention may be fitted to an agricultural machine of a different type, such as, for example, a lawnmower, a shredder or the like. Therefore, it will be appreciated that, although preferred characteristics will be described below in relation to embodiments in which the agricultural machine is a rotary harrow, these characteristics may also equally well be used if the agricultural machine were a lawnmower or the like.

Each rotor 1 preferably comprises a rotor shaft 2 with an axis X which carries at one end a plate or flange 3 which is arranged transversely to the axis X of the rotor and on which a tool holder 4 is fixed, preferably in a removable manner for potential replacement.

Each tool holder 4 is arranged to mount two or more tools 5 which are preferably identical to each other so as to be interchangeable, as explained more clearly below.

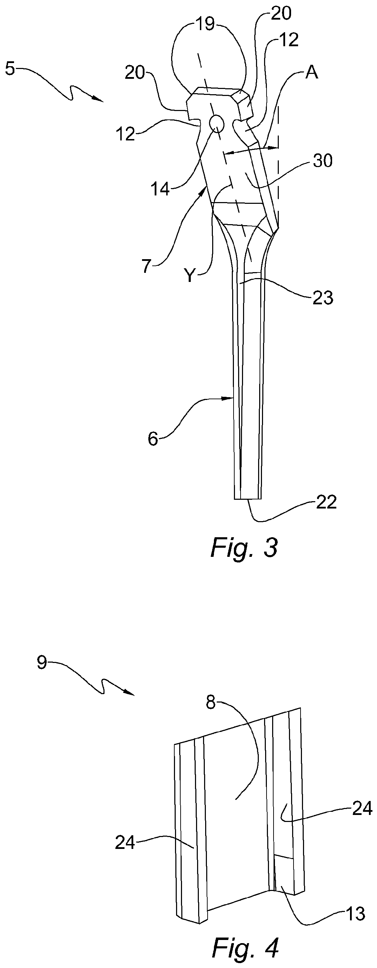

As illustrated in the embodiment of Figure 3, the tools 5 each comprise a shank 7 and a blade 6 which are integral with each other or in any case joined to form a unitary structure.

It may be noted that, in this context, the term "shank" is preferably intended to be understood to be an end portion of the tool 5 which is or can be fixed to the tool holder.

In some embodiments, the shank 7 has a through-hole 14 which can be used, for example, to suspend the tool 5 when it is not in use.

Preferably, the shank 7 extends in a removal direction Y of the tool 5 from the tool holder 4.

With reference to the plane of the blade 6, the shank 7 (more particularly, removal direction Y) and the blade 6 together form an angle A, preferably an acute angle. In a preferred embodiment, the angle A is between 5° and 40° and even more preferably it is between 10° and 30°. It will be understood that, in some embodiments, the angle A can be zero or a right-angle.

Advantageously, both the shank 7 and the blade 6 do not have bent portions about a longitudinal axis so that each tool 5 can be mounted in any of the two positions provided on the tool holder 4. Furthermore, advantageously, the blade 6 at least and preferably also the shank 7 are symmetrical with respect to a plane which contains the axis X of the rotor.

According to another advantageous aspect, the blade 6 starting from the shank 7 tapers towards the free end 22 thereof and has a decreasing cross-section, preferably with a tapering with an approximately trapezoidal shape, preferably isosceles-shaped, with the small side 23 facing the axis X of the rotor so as to terminate at a point with a substantially triangular cross-section. Preferably, when the tools 5 are installed in an operating position on the tool holder 4, the two blades 6 are substantially parallel with the axis X of the rotor or slightly divergent towards the free ends 22 thereof.

In some embodiments, the shank 7 is mounted on the rotor 1 in a seat 8, preferably in the form of a pocket. Still in a preferable manner, the seat 8 extends in the removal direction Y of the tool 5 from the seat itself.

The seat 8 can be delimited between two walls 9, 10. Preferably, the first wall 9 is integrally fixed to the tool holder 4 and, in one aspect, defines a pocket with two edges 24 which are preferably parallel and extend in the same direction and which are in any case formed so as to conform to the shape of the shank 7.

Preferably, the shank 7 has two opposing sides 20 which extend in the removal direction Y of the tool 5 from the seat 8. The sides 20 of the shank are advantageously configured to abut respective edges 24 of the seat 8. Furthermore, the shank 7 may comprise a pair of opposing faces 30 which preferably represent the large sides of the shank. According to embodiments, the sides 20 connect the faces 30 to each other.

The first wall 9 can be constructed by forging, generating more robust zones where needed. Preferably, an end deformation 13 is provided on at least one of the edges 24 in order to prevent the contact of the shank 7 with the corner of the pocket. In this manner, the concentration of the working load of the tool 5 is moved further away from the corner.

The second wall 10 is preferably formed in a plate-like manner and closes the seat 8 by clamping the shank 7 between the edges 24.

In one possible embodiment, the two walls 9, 10 are fixedly joined to each other, for example, by means of welding or mechanical connection with interference, in such a manner that the seat 8 is substantially in the form of a downwardly open pocket or in any case at the opposite side to the tool holder 4.

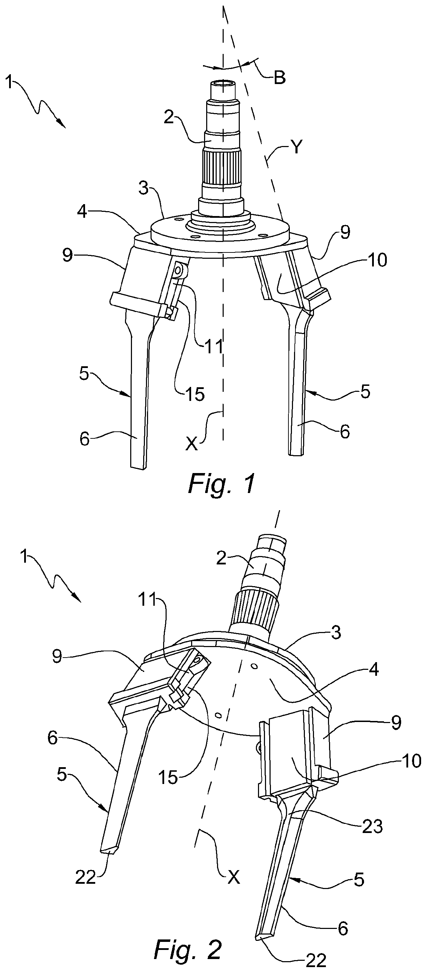

With reference to the embodiment of Figure 1, the location plane of the seat 8 and in particular of the walls 9, 10 forms, with respect to the axis X of the rotor, an angle B which, in the present embodiment, is substantially equal to the angle A which the shank 7 forms with respect to the plane of the blade 6.

For some applications, in particular of the harrow type, it is preferable for the angle B to be acute. For example, the angle B may be between 5° and 40° and more particularly between 10° and 30°.

This angle has the effect that, advantageously, when the shank 7 is inserted in the respective seat 8, the shank is radially inside the area which is travelled by the blade 6 during the rotation of the rotor 1 about the axis X thereof. In particular, the shank 7 extends from an end of the blade 6 towards the axis X of the rotor. In this manner, the shank is less exposed to wear during the processing of the soil.

It will be understood that, in some embodiments, the angle B may also be substantially zero because the seat 8 extends in a plane which is approximately parallel with the axis X.

For other applications, particularly of the lawn-cutting type, it is preferable for the angle B to be substantially a right-angle or in any case between 70° and 90° and more particularly between 80° and 90°.

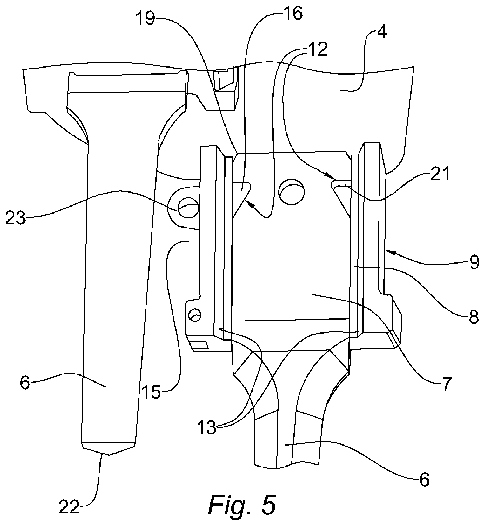

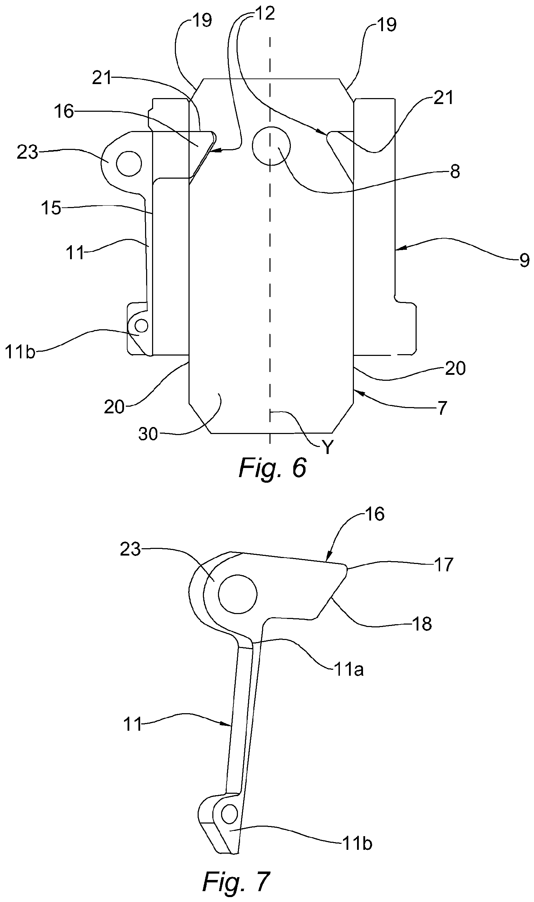

As illustrated in the embodiments of Figures 5 and 6, there are provided rapid fixing means between the seat 8 and the respective tool 5 in order to secure the shank 7 of the tool in the respective seat 8.

These rapid fixing means comprise at least one respective spring-mounted tooth 16, in particular spring-mounted by means of a spring 11, for example, of the leaf spring type, which is mounted on a flank 15 of the seat 8 or the walls 9, 10 so as to project into the seat 8 so as to interfere with the shank 7 when it is inserted in the seat 8 in order to retain it there.

Naturally, the spring 11 may be replaced by a more general resilient element 25. Therefore, it will be appreciated that, although there will be described below preferred features in relation to embodiments in which the resilient element 25 is a spring, these features may equally well also be used in the case of a resilient element 25 which is structurally different from the spring but functionally similar. In a preferable manner, the spring 11 extends longitudinally between an end 11a thereof which is fixed to the tooth 16 and an opposite end 11b thereof which is mounted on the flank 15 of the respective seat 8.

It may be noted that, in this context, the term "flank" of the seat 8 (or of the walls 9, 10) is preferably intended to be understood to be a flank which does not face the axis X of the rotor or which is directed towards the ground. In this manner, the flank is also readily accessible to an operator who is located at the side of the harrow or the lawnmower.

Advantageously, the rapid fixing means and the shank 7 are formed so as to urge the tooth 16 out of the seat 8 counter to the spring 11 by interference between the tooth and the shank when the shank is inserted in the seat 8 and to release the tooth 16 in order to engage with a recess 12 of the shank 7 in order to retain the shank in the respective seat 8 when the tooth 16 and recess 12 are located in a mutually corresponding position.

With reference to the embodiments of Figures 6 and 7, the tooth 16 is formed in a catch-like manner, with a wedge-like profile which is substantially triangular, the vertex 17 of which is directed towards the seat 8. Preferably, the profile is in the form of a right triangle with an oblique side 18 which forms a sliding plane for a surface 19 which has an inclined plane or which is otherwise formed (for example, rounded) of the shank 7 so as to press the tooth 16 counter to the spring 11 out of the seat 8 when the shank is inserted therein.

Therefore, it is preferable for at least at one of the opposing sides 20 of the shank 7, preferably at the opposite side to the blade 6, there to be provided a respective surface 19 which has an inclined plane or which is rounded and which is able to interfere with the tooth 16 in order to urge it counter to the spring 11 when the shank 7 is inserted in the seat 8.

In some embodiments, a respective surface 19 with an inclined plane affects both the opposite sides 20 of the shank 7 and is preferably directed at the opposite side to the respective blade 6.

As already mentioned, in at least one side, but preferably in both opposing sides 20 of the shank 7, there is formed, preferably with a symmetrical arrangement, a respective recess 12 which can receive the tooth 16 when the position of the shank coincides with the position for correct assembly of the tool 5 in the tool holder 4.

Preferably, when the shank 7 is inserted in the respective seat 8, the flank 15 of the seat faces the at least one of the opposing sides 20 of the shank in which the recess 12 is formed.

In one aspect, the recess 12 is completely a blind recess and preferably defines an undercut. It is further preferable for at least one wall 21 of the recess 12 to be located in a plane which is substantially perpendicular or in any case transverse to the removal direction Y of the shank 7 from the respective seat 8 so that the tooth 16 interferes with the wall 21 when the shank 7 is inserted in the respective seat in order to retain it there.

Advantageously, the tools 5 are axially symmetrical, which allows them to be inserted in any of the two (or more) seats 8 in an interchangeable manner. In this case, the tool 5 also preferably does not have any bent portions. In order to replace the tools of a rotary harrow or a lawnmower which is equipped in this manner, it is simply necessary to grip the spring 11 so as to remove the tooth 16 from the recess 12. In this case, the shank 7 of the tooth is pulled out from the seat 8. Conversely, during the insertion of the shank 7 in the seat 8, the simple fact of inserting the shank in the seat involves the automatic removal of the tooth 16 counter to the spring 11 and the resilient return thereof in order to engage with the recess 12 when the tooth and recess are mutually aligned.

In order to further facilitate the removal of the tooth 16 from the recess 12, in some embodiments it is possible to grip an extension piece 23 of the spring which projects from the flank 15 of the respective seat outwards. In a preferred embodiment, the extension piece 23 is opposite the tooth 16.

It must be observed that the removal of the tooth 16 does not require any work in the lower portion of the harrow or the lawnmower because the spring 11 or the potential extension piece 23 thereof are readily able to be gripped by the flank 15 of the respective seat which is also clearly visible and directly accessible to an operator who is located at the side of the harrow or lawnmower.

The invention thereby solves the problem set out and achieves a number of advantages, including:
- reducing the power consumed by the rotor,
- reversibility of the tool;
- speed of assembly and disassembly of the tool,
- elimination of positioning errors of the tool.

## Claims

1. An agricultural machine comprising at least one rotor (1) which is rotatably supported about an axis (X), the at least one rotor (1) including a tool holder (4) which extends transversely relative to the axis (X) of the rotor (1) and at least one tool (5) which is removably secured to the tool holder (4), each tool (5) including a blade (6) and a shank (7), with which the blade (6) is fixed in a respective seat (8) of the tool holder (4), the shank (7) being an end portion of the tool (5), rapid fixing means being provided between the seat (8) and the respective tool (5) in order to secure the shank (7) of the tool in the respective seat (8), **characterized in that** the rapid fixing means include at least one respective spring-mounted tooth which comprises a tooth (16) and a resilient element (25) which are mounted on the seat (8) so as to interfere with the shank (7) when it is inserted in the seat (8) in order to retain it there, whereby the rapid fixing means and the shank (7) are formed so as to urge the tooth (16) out of the seat (8) counter to the resilient element (25) by means of interference between the tooth (16) and shank (7) when the shank (7) is inserted in the seat (8) and to release the tooth (16) to engage with a recess (12) of the shank (7) in order to retain the shank (7) in the respective seat (8) when the tooth (16) and recess (12) are located in a mutually corresponding position.

2. An agricultural machine according to claim 1, wherein the tooth (16) is formed in a catch-like manner, preferably wherein the tooth (16) has a wedge-like profile with an oblique side (18) which forms a sliding plane for a surface (19) of the shank so as to press the tooth (16) counter to the resilient element (25) out of the seat (8) when the shank (7) is inserted in the seat.

3. An agricultural machine according to claim 2, wherein there are provided at opposite sides (20) of the shank (7) surfaces (19) which have an inclined plane or which are rounded and which are capable of interfering with the catch of the tooth (16) in order to urge the tooth (16) counter to the resilient element (25) when the shank (7) is inserted in the seat (8).

4. An agricultural machine according to one or more of the preceding claims, wherein the resilient element (25) is a spring (11), preferably of the leaf spring type.

5. An agricultural machine according to one or more of the preceding claims, wherein the tool (5) is axially symmetrical and/or wherein the recess (12) is formed on a side (20) of the shank (7) with a substantially triangular formation which tapers towards the opposite side.

6. An agricultural machine according to one or more of the preceding claims, wherein an angle (A) between 0° and 40° is formed between the shank (7) and blade (6), preferably wherein the angle (A) is between 10° and 30°.

7. An agricultural machine according to one or more of the preceding claims, wherein the blade (6) has a cross-section which progressively tapers away from the shank (7), preferably wherein the blade (6) has an initially trapezoidal cross-section near the shank (7) and tapers into a triangular cross-section at the opposite side.

8. An agricultural machine according to one or more of the preceding claims, wherein the agricultural machine is a rotary harrow or a lawnmower.

9. An agricultural machine according to any one of the preceding claims, wherein opposing sides (20) of the shank (7) extend longitudinally in a removal direction (Y) of the tool (5) from the seat (8), the opposing sides (20) not facing the axis (X) of the rotor when the shank (7) is inserted in the respective seat (8), at least one of the opposing sides (20) of the shank (7) being provided with the recess (12) which is able to receive the tooth (16) in order to block the tool (5) in the tool holder (4) in the removal direction (Y) of the tool from the seat (8).

10. An agricultural machine according to any one of the preceding claims, wherein the spring-mounted tooth is sufficient per se to ensure the retention of the shank (7) in the seat (8) thereof with respect to the forces transmitted by the blade (6) during the processing of the soil.

11. A kit for an agricultural machine according to one or more of the preceding claims, the kit comprising a tool holder (4) and at least one tool (5) which is removably secured to the tool holder (4), each tool (5) including a blade (6) and a shank (7), with which the blade (6) is fixed in a respective seat (8) of the tool holder (4), the shank (7) being an end portion of the tool (5), rapid fixing means being provided between the seat (8) and the respective tool (5) in order to secure the shank (7) of the tool in the respective seat (8), **characterized in that** the rapid fixing means include at least one respective spring-mounted tooth which comprises a tooth (16) and a resilient element (25) which are mounted on the seat (8) so as to interfere with the shank (7) when it is inserted in the seat (8) in order to retain it there, the rapid fixing means and the shank (7) being formed so as to urge the tooth (16) out of the seat (8) counter to the resilient element (25) by means of interference between the tooth (16) and shank (7) when the shank (7) is inserted in the seat (8) and to release the tooth (16) to engage with a recess (12) of the shank (7) in order to retain the shank (7) in the respective seat (8) when the tooth (16) and recess (12) are located in a mutually corresponding position.

12. A tool (5) for a tool holder (4) of a rotor (1) for a rotary harrow, the tool comprising a blade (6) and a shank (7), with which the blade (6) can be removably secured to the tool holder (4), the blade (6) and shank (7) being in one piece, an angle (A) between 5° and 40° being formed between the shank (7) and blade (6), the blade (6) having a cross-section which progressively tapers away from the shank (7), the shank (7) being able to be inserted in a seat (8) of the tool holder (4), at least one of the opposite sides (20) of the shank (7) being provided with a recess (12) which can receive a catch-like tooth (16) for blocking the tool (5) in the tool holder (4) in a removal direction (Y) of the tool (5) from the seat (8), the recess (12) being transverse relative to the removal direction (Y) so that the tooth (16) interferes with the recess (12) when the shank (7) is inserted in the seat (8) in order to retain it there, wherein at least one wall (21) of the recess (12) is located in a plane which is transverse to the removal direction (Y) of the shank (7) from the respective seat (8) so that the tooth (16) interferes with the wall (21) when the shank (7) is inserted in the respective seat in order to retain it there.

13. A tool (5) according to claim 12, wherein a surface (19) which has an inclined plane or which is rounded and which is capable of interfering with the tooth (16) in order to urge it when the shank (7) is inserted in the seat (8) in the removal direction (Y) is provided on the at least one of the sides (20) of the shank (7) at the opposite side to the blade (6).

14. A tool (5) according to claim 12 or 13, wherein the recess (12) is formed in a side (20) of the shank (7) with a formation which is substantially triangular and tapers towards the opposite side and/or wherein the blade (6) has an initially trapezoidal cross-section near the shank (7) and tapers into a triangular cross-section at the opposite side.

15. A tool (5) according to any one of claims 12 to 14, wherein the sides (20) represent the small sides of the shank, preferably wherein the shank (7) comprises a pair of opposing faces (30) which represent the large sides of the shank, the sides (20) connecting the faces (30) to each other.

## Patentansprüche

1. Landwirtschaftliche Maschine mit wenigstens einem Rotor (1), der um eine Achse (X) drehbar gelagert ist, wobei der wenigstens eine Rotor (1) einen Werkzeughalter (4), der sich quer zur Achse (X) des Rotors (1) erstreckt, und wenigstens ein Werkzeug (5) aufweist, das lösbar an dem Werkzeughalter (4) befestigt ist, wobei jedes Werkzeug (5) eine Klinge (6) und einen Schaft (7) aufweist, mit dem die Klinge (6) in einem jeweiligen Sitz (8) des Werkzeughalters (4) befestigt ist, wobei der Schaft (7) ein Endabschnitt des Werkzeugs (5) ist, wobei zwischen dem Sitz (8) und dem jeweiligen Werkzeug (5) Schnellbefestigungsmittel vorgesehen sind, um den Schaft (7) des Werkzeugs in dem jeweiligen Sitz (8) zu befestigen, **dadurch gekennzeichnet, dass** die Schnellbefestigungsmittel wenigstens einen jeweiligen federnd gelagerten Zahn aufweisen, der einen Zahn (16) und ein elastisches Element (25) aufweist, die an dem Sitz (8) so gelagert sind, dass sie mit dem Schaft (7) interferieren, wenn er in den Sitz (8) eingesetzt ist, um ihn dort zu halten, wobei die Schnellbefestigungsmittel und der Schaft (7) so ausgebildet sind, dass sie den Zahn (16) aus dem Sitz (8) gegen das elastische Element (25) mittels Interferenz zwischen dem Zahn (16) und dem Schaft (7) drücken, wenn der Schaft (7) in den Sitz (8) eingesetzt ist, und den Zahn (16) freigeben, um mit einer Ausnehmung (12) des Schafts (7) in Eingriff zu gelangen, um den Schaft (7) in dem jeweiligen Sitz (8) zu halten, wenn sich der Zahn (16) und die Ausnehmung (12) in einer zueinander entsprechenden Position befinden.

2. Landwirtschaftliche Maschine nach Anspruch 1, wobei der Zahn (16) rastartig ausgebildet ist, wobei vorzugsweise der Zahn (16) ein keilartiges Profil mit einer schrägen Seite (18) aufweist, die eine Gleitebene für eine Fläche (19) des Schafts bildet, um den Zahn (16) gegen das elastische Element (25) aus dem Sitz (8) zu drücken, wenn der Schaft (7) in den Sitz eingesetzt ist.

3. Landwirtschaftliche Maschine nach Anspruch 2, wobei an gegenüberliegenden Seiten (20) des Schafts (7) Flächen (19) vorgesehen sind, die eine geneigte Ebene aufweisen oder die abgerundet sind und die in der Lage sind, mit der Rastung des Zahns (16) zu interferieren, um den Zahn (16) gegen das elastische Element (25) zu drücken, wenn der Schaft (7) in den Sitz (8) eingesetzt ist.

4. Landwirtschaftliche Maschine nach einem oder mehreren der vorhergehenden Ansprüche, wobei das elastische Element (25) eine Feder (11) ist, vorzugsweise vom Blattfedertyp.

5. Landwirtschaftliche Maschine nach einem oder mehreren der vorhergehenden Ansprüche, wobei das Werkzeug (5) axialsymmetrisch ist und/oder wobei die Aussparung (12) auf einer Seite (20) des Schafts (7) mit einer im Wesentlichen dreieckigen Formation ausgebildet ist, die sich zur gegenüberliegenden Seite hin verjüngt.

6. Landwirtschaftliche Maschine nach einem oder mehreren der vorhergehenden Ansprüche, wobei ein Winkel (A) zwischen 0° und 40° zwischen dem Schaft (7) und dem Blatt (6) ausgebildet ist, vorzugsweise wobei der Winkel (A) zwischen 10° und 30° beträgt.

7. Landwirtschaftliche Maschine nach einem oder mehreren der vorhergehenden Ansprüche, wobei das Blatt (6) einen Querschnitt aufweist, der sich vom Schaft (7) weg progressiv verjüngt, vorzugsweise wobei das Blatt (6) nahe dem Schaft (7) einen anfänglich trapezförmigen Querschnitt aufweist und sich an der gegenüberliegenden Seite zu einem dreieckigen Querschnitt verjüngt.

8. Landwirtschaftliche Maschine nach einem oder mehreren der vorhergehenden Ansprüche, wobei die landwirtschaftliche Maschine eine Kreiselegge oder ein Rasenmäher ist.

9. Landwirtschaftliche Maschine nach einem der vorhergehenden Ansprüche, wobei sich gegenüberliegende Seiten (20) des Schafts (7) in Längsrichtung in einer Entnahmerichtung (Y) des Werkzeugs (5) aus dem Sitz (8) erstrecken, wobei die gegenüberliegenden Seiten (20) nicht der Achse (X) des Rotors zugewandt sind, wenn der Schaft (7) in den jeweiligen Sitz (8) eingesetzt ist, wobei mindestens eine der gegenüberliegenden Seiten (20) des Schafts (7) mit der Aussparung (12) versehen ist, die den Zahn (16) aufnehmen kann, um das Werkzeug (5) in dem Werkzeughalter (4) in der Entnahmerichtung (Y) des Werkzeugs aus dem Sitz (8) zu blockieren.

10. Landwirtschaftliche Maschine nach einem der vorhergehenden Ansprüche, wobei der federmontierte Zahn an sich ausreichend ist, um den Halt des Schafts (7) in seinem Sitz (8) in Bezug auf die Kräfte zu gewährleisten, die von dem Blatt (6) während der Bearbeitung des Bodens übertragen werden.

11. Bausatz für eine landwirtschaftliche Maschine nach einem oder mehreren der vorhergehenden Ansprüche,
wobei der Bausatz einen Werkzeughalter (4) und wenigstens ein Werkzeug (5) aufweist, das lösbar an dem Werkzeughalter (4) befestigt ist, wobei jedes Werkzeug (5) eine Klinge (6) und einen Schaft (7) aufweist, mit dem die Klinge (6) in einem jeweiligen Sitz (8) des Werkzeughalters (4) befestigt ist, wobei der Schaft (7) ein Endabschnitt des Werkzeugs (5) ist, wobei zwischen dem Sitz (8) und dem jeweiligen Werkzeug (5) Schnellbefestigungsmittel vorgesehen sind, um den Schaft (7) des Werkzeugs in dem jeweiligen Sitz (8) zu befestigen, **dadurch gekennzeichnet, dass** die Schnellbefestigungsmittel wenigstens einen jeweiligen federnd gelagerten Zahn aufweisen, der einen Zahn (16) und ein elastisches Element (25) aufweist, die an dem Sitz (8) so gelagert sind, dass sie mit dem Schaft (7) interferieren, wenn er in den Sitz (8) eingesetzt ist, um ihn dort zu halten, wobei die Schnellbefestigungsmittel und der Schaft (7) so ausgebildet sind, dass sie den Zahn (16) aus dem Sitz (8) gegen das elastische Element (25) mittels Interferenz zwischen dem Zahn (16) und dem Schaft (7) drücken, wenn der Schaft (7) in den Sitz (8) eingesetzt ist, und den Zahn (16) freigeben, um mit einer Ausnehmung (12) des Schafts (7) in Eingriff zu gelangen, um den Schaft (7) in dem jeweiligen Sitz (8) zu halten, wenn sich der Zahn (16) und die Ausnehmung (12) in einer zueinander entsprechenden Position befinden.

12. Werkzeug (5) für einen Werkzeughalter (4) eines Rotors (1) für eine Kreiselegge,
wobei das Werkzeug ein Blatt (6) und einen Schaft (7) aufweist, mit dem das Blatt (6) lösbar an dem Werkzeughalter (4) befestigt werden kann, wobei das Blatt (6) und der Schaft (7) einstückig sind, wobei zwischen dem Schaft (7) und dem Blatt (6) ein Winkel (A) zwischen 5° und 40° ausgebildet ist, wobei das Blatt (6) einen Querschnitt aufweist, der sich vom Schaft (7) weg progressiv verjüngt, wobei der Schaft (7) in einen Sitz (8) des Werkzeughalters (4) eingesetzt werden kann, wobei mindestens eine der gegenüberliegenden Seiten (20) des Schafts (7) mit einer Aussparung (12) versehen ist, die einen rastartigen Zahn (16) zum Blockieren des Werkzeugs (5) in dem Werkzeughalter (4) in einer Entnahmerichtung (Y) des Werkzeugs (5) aus dem Sitz (8) aufnehmen kann, wobei die Aussparung (12) quer zur Entnahmerichtung (Y) verläuft, so dass der Zahn (16) mit der Aussparung (12) interferiert, wenn der Schaft (7) in den Sitz (8) eingesetzt ist, um ihn dort zu halten, wobei sich mindestens eine Wand (21) der Aussparung (12) in einer Ebene befindet, die quer zur Entnahmerichtung (Y) des Schafts (7) aus dem jeweiligen Sitz (8) verläuft, so dass der Zahn (16) mit der Wand (21) interferiert, wenn der Schaft (7) in den jeweiligen Sitz eingesetzt ist, um ihn dort zu halten.

13. Werkzeug (5) nach Anspruch 12, wobei an der mindestens einen der Seiten (20) des Schafts (7) an der dem Blatt (6) gegenüberliegenden Seite eine Fläche (19) vorgesehen ist, die eine geneigte Ebene aufweist oder die abgerundet ist und die in der Lage ist, mit dem Zahn (16) zu interferieren, um ihn zu drücken, wenn der Schaft (7) in den Sitz (8) in der Entnahmerichtung (Y) eingesetzt ist.

14. Werkzeug (5) nach Anspruch 12 oder 13, wobei die Aussparung (12) in einer Seite (20) des Schafts (7) mit einer Formation ausgebildet ist, die im Wesentlichen dreieckig ist und sich zur gegenüberliegenden Seite hin verjüngt, und/oder wobei das Blatt (6) nahe dem Schaft (7) einen anfänglich trapezförmigen Querschnitt aufweist und sich an der gegenüberliegenden Seite zu einem dreieckigen Querschnitt verjüngt.

15. Werkzeug (5) nach einem der Ansprüche 12 bis 14, wobei die Seiten (20) die kleinen Seiten des Schafts darstellen, vorzugsweise wobei der Schaft (7) ein Paar gegenüberliegender Flächen (30) umfasst, die die großen Seiten des Schafts darstellen, wobei die Seiten (20) die Flächen (30) miteinander verbinden.

## Revendications

1. Machine agricole comprenant au moins un rotor (1) supporté en rotation autour d'un axe (X), l'au moins un rotor (1) incluant un porte-outil (4) qui s'étend transversalement par rapport à l'axe (X) du rotor (1) et au moins un outil (5) qui est assujetti de manière amovible au porte-outil (4), chaque outil (5) incluant une lame (6) et une tige (7), avec laquelle la lame (6) est fixée dans un siège (8) respectif du porte-outil (4), la tige (7) étant une partie terminale de l'outil (5), des moyens de fixation rapide étant prévus entre le siège (8) et l'outil respectif (5) afin d'assujettir la tige (7) de l'outil dans le siège respectif (8), **caractérisée en ce que** les moyens de fixation rapide incluent au moins une dent respective montée sur ressort qui comprend une dent (16) et un élément élastique (25) qui sont montés sur le siège (8) de manière à interférer avec la tige (7) lorsqu'elle est insérée dans le siège (8) afin de l'y retenir, les moyens de fixation rapide et la tige (7) étant formés de manière à pousser la dent (16) hors du siège (8) contre l'élément élastique (25) par l'interférence entre la dent (16) et la tige (7) lorsque la tige (7) est insérée dans le siège (8) et pour libérer la dent (16) pour qu'elle s'engage dans un évidement (12) de la tige (7) afin de retenir la tige (7) dans le siège respectif (8) lorsque la dent (16) et l'évidement (12) sont situés dans une position correspondant mutuellement.

2. Machine agricole selon la revendication 1, dans laquelle la dent (16) est formée en forme de prise, de préférence dans laquelle la dent (16) a un profil en forme de coin avec un côté oblique (18) qui forme un plan de glissement pour une surface (19) de la tige de manière à presser la dent (16) contre l'élément élastique (25) hors du siège (8) lorsque la tige (7) est insérée dans le siège.

3. Machine agricole selon la revendication 2, dans laquelle sont prévues sur les côtés opposés (20) de la tige (7) des surfaces (19) qui ont un plan incliné ou qui sont arrondies et qui sont capables d'interférer avec la prise de la dent (16) afin de pousser la dent (16) contre l'élément élastique (25) lorsque la tige (7) est insérée dans le siège (8).

4. Machine agricole selon une ou plusieurs des revendications précédentes, dans laquelle l'élément élastique (25) est un ressort (11), de préférence du type ressort à lames.

5. Machine agricole selon l'une ou plusieurs des revendications précédentes, dans laquelle l'outil (5) est axialement symétrique et/ou dans laquelle l'évidement (12) est formé sur un côté (20) de la tige (7) avec une formation substantiellement triangulaire qui va en s'effilant vers le côté opposé.

6. Machine agricole selon une ou plusieurs des revendications précédentes, dans laquelle un angle (A) compris entre 0° et 40° est formé entre la tige (7) et la lame (6), de préférence dans lequel l'angle (A) est compris entre 10° et 30°.

7. Machine agricole selon l'une ou plusieurs des revendications précédentes, dans laquelle la lame (6) a une section transversale qui s'effile progressivement à partir de la tige (7), de préférence dans laquelle la lame (6) a une section transversale initialement trapézoïdale près de la tige (7) et s'effile en une section transversale triangulaire du côté opposé.

8. Machine agricole selon une ou plusieurs des revendications précédentes, dans laquelle la machine agricole est une herse rotative ou une tondeuse à gazon.

9. Machine agricole selon l'une quelconque des revendications précédentes, dans laquelle les côtés opposés (20) de la tige (7) s'étendent longitudinalement dans une direction de retrait (Y) de l'outil (5) du siège (8), les côtés opposés (20) ne faisant pas face à l'axe (X) du rotor lorsque la tige (7) est insérée dans le siège respectif (8), au moins un des côtés opposés (20) de la tige (7) est pourvu d'une cavité (12) capable de recevoir la dent (16) afin de bloquer l'outil (5) dans le porte-outil (4) dans la direction de retrait (Y) de l'outil du siège (8).

10. Machine agricole selon l'une quelconque des revendications précédentes, dans laquelle la dent montée sur ressort est suffisante en soi pour assurer la retenue de la tige (7) dans son siège (8) par rapport aux forces transmises par la lame (6) pendant le traitement du sol.

11. Kit pour machine agricole selon une ou plusieurs des revendications précédentes, le kit comprenant un porte-outil (4) et au moins un outil (5) assujetti de manière amovible au porte-outil (4), chaque outil (5) incluant une lame (6) et une tige (7), avec laquelle la lame (6) est fixée dans un siège respectif (8) du porte-outil (4), la tige (7) étant une partie terminale de l'outil (5), des moyens de fixation rapide étant prévus entre le siège (8) et l'outil (5) respectif afin de fixer la tige (7) de l'outil dans le siège (8) respectif, **caractérisée en ce que** les moyens de fixation rapide incluent au moins une dent montée sur ressort qui inclut une dent (16) et un élément élastique (25) qui sont montés sur le siège (8) de manière à interférer avec la tige (7) lorsqu'elle est insérée dans le siège (8) afin de l'y retenir, les moyens de fixation rapide et la tige (7) étant formés de manière à pousser la dent (16) hors du siège (8) contre l'élément élastique (25) au moyen d'une interférence entre la dent (16) et la tige (7) lorsque la tige (7) est insérée dans le siège (8) et pour libérer la dent (16) pour qu'elle s'engage dans un évidement (12) de la tige (7) afin de retenir la tige (7) dans le siège respectif (8) lorsque la dent (16) et l'évidement (12) sont situés dans une position correspondant mutuellement.

12. Outil (5) pour un porte-outil (4) d'un rotor (1) pour herse rotative, l'outil comprenant une lame (6) et une tige (7), avec laquelle la lame (6) peut être fixée de manière amovible au porte-outil (4), la lame (6) et la tige (7) étant d'une seule pièce, un angle (A) entre 5° et 40° étant formé entre la tige (7) et la lame (6), la lame (6) ayant une section transversale qui s'effile progressivement à partir de la tige (7), la tige (7) pouvant être insérée dans un siège (8) du porte-outil (4), au moins un des côtés opposés (20) de la tige (7) étant pourvu d'un évidement (12) pouvant recevoir une dent (16) en forme de prise pour bloquer l'outil (5) dans le porte-outil (4) dans une direction d'extraction (Y) de l'outil (5) hors du siège (8), l'évidement (12) étant transversal par rapport à la direction de retrait (Y) de sorte que la dent (16) interfère avec l'évidement (12) lorsque la tige (7) est insérée dans le siège (8) afin de l'y retenir, dans lequel au moins une paroi (21) de l'évidement (12) est située dans un plan transversal à la direction de retrait (Y) de la tige (7) du siège respectif (8) de sorte que la dent (16) interfère avec la paroi (21) lorsque la tige (7) est insérée dans le siège respectif afin de l'y retenir.

13. Outil (5) selon la revendication 12, dans lequel une surface (19) qui a un plan incliné ou qui est arrondie et qui est capable d'interférer avec la dent (16) afin de la pousser lorsque la tige (7) est insérée dans le siège (8) dans la direction de retrait (Y) est prévue sur au moins un des côtés (20) de la tige (7) du côté opposé à la lame (6).

14. Outil (5) selon la revendication 12 ou 13, dans lequel l'évidement (12) est formé dans un côté (20) de la tige (7) avec une formation qui est substantiellement triangulaire et s'effile vers le côté opposé et/ou dans lequel la lame (6) a une section transversale initialement trapézoïdale près de la tige (7) et s'effile en une section transversale triangulaire sur le côté opposé.

15. Outil (5) selon l'une des revendications 12 à 14, dans lequel les côtés (20) représentent les petits côtés de la tige, de préférence dans lequel la tige (7) comprend une paire de faces opposées (30) qui représentent les grands côtés de la tige, les côtés (20) reliant les faces (30) l'une à l'autre.
